# DEMANDE DE BREVET EUROPEEN

(11) **EP 2 104 068 A1**
(43) Date de publication de la demande: **23.09.2009**
(21) Numéro de dépôt: 09153396.8
(22) Date de dépôt: 23.02.2009
(51) Int. Cl.: G06Q 50/00, G06Q 10/00

(54) **Dispositif et procédé d'analyse d'informations relatives à des produits ou services, par corrélation avec des ensembles de régles**

(30) Priorité: 18.03.2008 FR 0851733
(71) Demandeur: Alcatel Lucent, 75008 Paris (FR)
(72) Inventeur: Balageas, Fabien, 91620, NOZAY (FR); Christophe, Benoit, 91620, NOZAY (FR)
(74) Mandataire: Korakis-Ménager, Sophie

(57) **Abrégé**

Un dispositif (D) est dédié à l'analyse d'informations relatives à des produits et services. Ce dispositif (D) comprend des moyens d'analyse (MA) chargés, en cas de réception d'un identificateur représentant un produit ou service, d'accéder à des premières données pour identifier ce produit ou service parmi elles, en fonction de cet identificateur reçu, puis d'accéder à au moins une source d'informations (SI) pour y rechercher des informations relatives au produit ou service identifié, puis de déterminer parmi ces informations recherchées si le produit ou service identifié satisfait à un ensemble d'au moins une règle choisi, et de délivrer un message indiquant au moins le résultat de cette détermination.

## Description

L'invention concerne le domaine de l'analyse d'informations relatives à des produits et services.

Lorsqu'une personne veut acheter ou utiliser un produit ou un service, il peut arriver qu'elle souhaite obtenir en direct certaines informations sur celui-ci. A titre d'exemple, une personne peut souhaiter savoir où et dans quelles conditions est fabriqué un produit de manière à vérifier si cela correspond à ses critères et/ou règles éthiques ou déontologiques, notamment, ou bien si elle peut consommer un produit compte tenu de ses éventuelles contraintes médicales et/ou physiques et/ou religieuses.

Pour obtenir de telles informations sur des produits ou services que l'on souhaite acheter ou utiliser, il existe au moins quatre solutions.

Une première solution consiste à effectuer soi-même des recherches auprès de sources d'informations, comme par exemple des sites Internet, au moyen d'un navigateur (moteur de recherches) d'un équipement de communication, ou auprès d'amis via des appels téléphoniques ou des messages électroniques au moyen d'un équipement de communication. Cette première solution est généralement peu efficace et/ou fastidieuse et/ou chronophage.

Une deuxième solution consiste à obtenir auprès de tiers des résumés ou comptes-rendus d'analyse de produit ou service au moyen d'un équipement de communication. Cette deuxième solution nécessite l'analyse des résumés ou comptes-rendus, ce qui peut s'avérer chronophage. En outre, cela peut s'avérer peu fiable du fait que les résumés ou comptes-rendus peuvent ne pas être récents. De plus, il peut s'avérer difficile de corréler des informations contenues dans des résumés ou comptes-rendus provenant de sources d'informations différentes.

Une troisième solution consiste à utiliser un outil permettant d'obtenir un identificateur de produit ou service, comme par exemple un code-barres ou un identifiant (éventuellement de type RFID). De tels outils sont par exemple commercialisés par les sociétés Baracoda et Symbol. L'inconvénient principal de cette solution réside dans le fait que les outils ont été développés pour des besoins industriels (par exemple pour les chaînes de montage ou pour gérer des stocks, ou encore pour limiter les vols) et donc qu'ils sont très peu utilisés par le grand public. En outre, ces outils ne permettent qu'une identification des produits, et non l'obtention d'informations générales relatives auxdits produits, et encore moins la vérification que des produits satisfont à des critères et/ou des règles.

Une quatrième solution consiste à effectuer des recherches textuelles au moyen d'un moteur de règles (ou « rule engine »). L'inconvénient principal de cette solution réside dans le fait qu'un moteur de règles ne permet pas d'effectuer des corrélations entre des informations qui ont été obtenues dans des sources d'informations utilisant des formats de stockage différents. En outre, il est difficile d'adresser une requête à un moteur de règles lorsque le produit n'a pas été précisément identifié. De plus, l'utilisation d'un moteur de règles nécessite la compréhension et la maîtrise de son langage (qui n'est généralement pas un langage naturel), ce qui n'est pas toujours facile, en particulier pour un néophyte.

Aucune solution connue n'apportant une entière satisfaction, l'invention a donc pour but d'améliorer la situation.

Elle propose à cet effet un procédé, dédié à l'analyse d'informations relatives à des produits et services, et consistant :
- à identifier un produit ou service parmi des premières données, en fonction d'un identificateur qui le représente,
- à rechercher dans au moins une source d'informations des informations relatives au produit ou service identifié,
- à déterminer si le produit ou service identifié satisfait à un ensemble d'au moins une règle choisi, compte tenu des informations recherchées, et
- à délivrer un message indiquant au moins le résultat de la détermination.

Le procédé selon l'invention peut comporter d'autres caractéristiques qui peuvent être prises séparément ou en combinaison, et notamment :
- lorsque le produit ou service identifié ne satisfait pas à l'ensemble choisi, on peut délivrer un message qui indique également au moins une raison de ce défaut de satisfaction ;
- lorsqu'il existe une éventualité que le produit ou service identifié ne satisfasse pas à l'ensemble choisi, on peut délivrer un message qui indique également au moins une raison de cette possibilité de défaut de satisfaction ;
- lorsque le produit ou service identifié ne satisfait pas à l'ensemble choisi ou lorsqu'il existe une éventualité que le produit ou service identifié ne satisfasse pas à l'ensemble choisi, on peut tenter de déterminer au moins un produit ou service sensiblement équivalent au produit ou service identifié, et donc satisfaisant à l'ensemble de règle(s) choisi, de manière à délivrer un message qui indique également chaque produit ou service sensiblement équivalent déterminé ;
- l'identification d'un produit ou service peut être soit « forte » lorsqu'elle aboutit à la détermination d'une instance d'une classe de produit ou service, soit « faible » lorsqu'elle aboutit à la détermination d'une appartenance à une classe de produit ou service. Dans ce cas, on peut avoir des règles de portée générale pour l'identification faible et/ou des règles de portée (très) précise pour l'identification farte ;
- les ensembles de règle(s) peuvent évoluer dans le temps de façon dynamique, par exemple en fonction du contexte ;
- chaque identificateur peut par exemple être choisi parmi (au moins) un code-barres et un identifiant (éventuellement de type RFID) ;
- on peut obtenir puis fournir l'identificateur au moyen d'un équipement d'un usager ;
- certains au moins des ensembles de régle(s) peuvent être associés à des usagers disposant d'un équipement ;
   ➢ on peut générer certaines au moins des règles à partir de « pré-règles » qui sont définies en langage naturel ou pseudo-contraint par des usagers et qui sont fournies par les équipements dont ils disposent ;
   ➢ certaines règles de certains ensembles associés à des usagers peuvent être issues d'ensemble(s) de règles associées à des personnes morales (par exemple des organisations gouvernementales ou non gouvernementales) sélectionnées par les usagers du fait de la confiance qu'il leur accorde (permettant ainsi de simplifier le travail de définition d'ensembles pour un usager qui accepte des règles par défaut, tout en conservant la possibilité de les modifier par la suite) ;
   ➢ on peut attribuer des niveaux d'importance différents aux règles afin de ne tenir compte que des règles qui ont le niveau de priorité le plus élevé lorsqu'un ensemble comporte des règles antagonistes ou conflictuelles ;
- les règles peuvent être relatives à l'achat ou à l'utilisation de produit(s) ou service(s) ;
- certaines règles peuvent être applicables de façon temporaire pendant une durée choisie ;
- certaines règles peuvent être générées à partir de portions textuelles de documents numériques sélectionnées par des usagers et décrivant des idées auxquelles ils adhèrent.

L'invention propose également un dispositif, dédié à l'analyse d'informations relatives à des produits et services, et comprenant des moyens d'analyse chargés, en cas de réception d'un identificateur représentant un produit ou service, i) d'accéder à des premières données afin d'identifier parmi celles-ci le produit ou service, en fonction de l'identificateur reçu, puis ii) d'accéder à au moins une source d'informations pour y rechercher des informations relatives au produit ou service identifié, puis iii) de déterminer si le produit ou service identifié satisfait à un ensemble d'au moins une règle choisi compte tenu des informations recherchées, et iv) de délivrer un message indiquant au moins le résultat de cette détermination.

Le dispositif selon l'invention peut comporter d'autres caractéristiques qui peuvent être prises séparément ou en combinaison, et notamment :
- ses moyens d'analyse peuvent être chargés, lorsque le produit ou service identifié ne satisfait pas à l'ensemble choisi, de délivrer un message qui indique également au moins une raison de ce défaut de satisfaction ;
- ses moyens d'analyse peuvent être chargés, lorsqu'il existe une éventualité que le produit ou service identifié ne satisfasse pas à l'ensemble choisi, de délivrer un message qui indique également au moins une raison de cette possibilité de défaut de satisfaction ;
- ses moyens d'analyse peuvent être chargés, lorsque le produit ou service identifié ne satisfait pas à l'ensemble choisi ou lorsqu'il existe une éventualité que le produit ou service identifié ne satisfasse pas à l'ensemble choisi, de tenter de déterminer au moins un produit ou service sensiblement équivalent à ce produit ou service identifié, et donc satisfaisant à l'ensemble de règle(s) choisi, de manière à délivrer un message qui indique également chaque produit ou service sensiblement équivalent déterminé ;
- ses moyens d'analyse peuvent être chargés d'effectuer des identifications de produit ou service dites soit « fortes » lorsqu'elles aboutissent à la détermination d'une instance d'une classe de produit ou service, soit « faibles » lorsqu'elles aboutissent à la détermination d'une appartenance à une classe de produit ou service. Dans ce cas, on peut avoir des règles de portée générale pour l'identification faible et/ou des règles de portée (très) précise pour l'identification forte ;
- il peut comprendre des moyens de transcription chargés, en cas de réception d'une « pré-règle » définie en langage naturel ou pseudo-contraint par un usager et fournie par l'équipement dont dispose ce dernier, de transcrire la pré-règle en une règle de l'ensemble associé à l'usager ;
- ses moyens d'analyse peuvent être chargés, en présence d'un produit ou service identifié et d'un ensemble comportant des règles associées à des niveaux d'importance différents et pour certaines antagonistes entre elles, de ne tenir compte que des règles qui ont le niveau de priorité le plus élevé ;
- ses moyens d'analyse peuvent être chargés, en présence d'une règle applicable de façon temporaire pendant une durée choisie, de n'appliquer cette règle temporaire que pendant sa durée d'application.

L'invention propose également un serveur destiné à être connecté à un réseau de communication et équipé d'un dispositif d'analyse du type de celui présenté ci-avant.

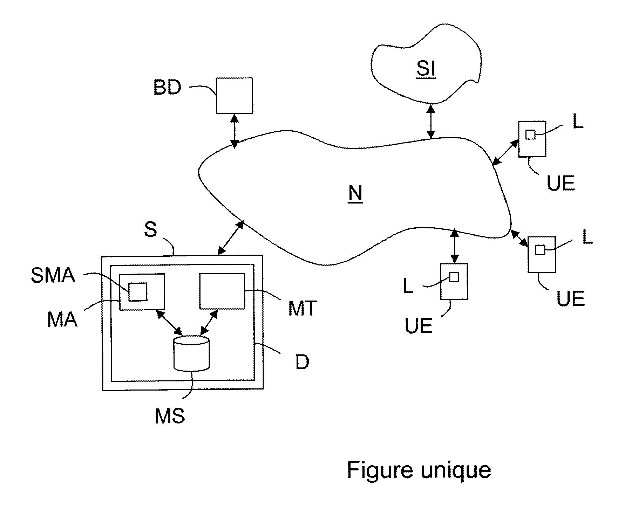

D'autres caractéristiques et avantages de l'invention apparaîtront à l'examen de la description détaillée ci-après, et du dessin annexé, sur lequel l'unique figure illustre de façon très schématique un serveur équipé d'un exemple de réalisation d'un dispositif d'analyse selon l'invention et connecté à un réseau de communication auquel sont également connectés des équipements de communication d'usagers. Le dessin annexé pourra non seulement servir à compléter l'invention, mais aussi contribuer à sa définition, le cas échéant.

L'invention a pour objet de permettre la collecte d'informations relatives à des produits ou services en vue de vérifier s'ils satisfont à des règles (ou critères).

Tout type de produit ou service est concerné par l'invention dès lors qu'il peut être identifié.

L'invention propose un procédé dédié à l'analyse d'informations relatives à des produits et services. Un tel procédé comprend quatre étapes principales.

Une première étape consiste à identifier un produit ou service parmi des premières données, en fonction d'un identificateur qui le représente.

Tout type d'identificateur de produit ou service peut être utilisé dès lors qu'il représente de façon non (ou peu) ambiguë un produit ou service. Ainsi, il pourra s'agir d'un code-barres porté par un produit ou d'un identifiant porté par un produit, comme par exemple un numéro de série, ou stocké dans une mémoire portée par un produit, comme par exemple une mémoire d'une puce électronique d'une radio-étiquette de type RFID (passive ou semi-passive).

Comme illustré sur l'unique figure, un identificateur peut par exemple être obtenu au moyen d'un équipement UE muni d'un lecteur approprié L, comme par exemple un lecteur de codes-barres ou un lecteur d'identifiants RFID (généralement appelés IPCs (pour « Identifiant Product Cades »)).

Les identificateurs sont transmis à un dispositif d'analyse d'informations D selon l'invention. Ce dernier (D) est préférentiellement accessible via un réseau de communication N. Il peut par exemple faire partie d'un serveur S connecté au réseau de communication N (comme illustré sur l'unique figure). Mais, il pourrait également être couplé à un serveur ou bien constituer un équipement communicant.

Les identificateurs sont transmis au dispositif D (ou au serveur S qui le contient ou auquel il est couplé) par des équipements de communication qui peuvent se connecter au réseau de communication N et qui sont de préférence les équipements UE précités (munis d'un (ou couplés à un) lecteur L). Ces équipements UE sont de préférence de dimensions réduites, comme par exemple des téléphones mobiles ou cellulaires (éventuellement de type « smartphone ») équipés d'un lecteur L, ou des assistants personnels numériques (ou PDAs, éventuellement de type Pocket PC) communicants et équipés d'un lecteur L. Ils appartiennent de préférence à des usagers qui sont abonnés à un réseau de communication. Dans ce cas, lorsqu'un usager souhaite savoir s'il peut acheter un produit (ou service) qui se trouve placé devant lui, il se saisit de son équipement UE afin d'obtenir l'identificateur de ce produit au moyen de son lecteur L, puis son équipement UE transmet au dispositif D cet identificateur (par exemple grâce à une application dédiée), via le réseau de communication N.

On comprendra qu'il est ici avantageux que le réseau de communication N soit un réseau sans fil, comme par exemple un réseau de type cellulaire ou mobile (GSM, GPRS/EDGE, UMTS ou CDMA (2000)), ou de type WLAN (« Wireless Local Area Network » - réseau local sans fil, tel qu'un réseau WiMAX ou Wi-Fi).

On notera que dans une variante un équipement UE peut être équipé de son propre dispositif d'analyse D.

C'est le dispositif d'analyse D qui est chargé d'identifier un produit ou service parmi des premières données, en fonction de l'identificateur qui le représente. Pour ce faire, il comprend un module d'analyse MA qui est notamment chargé d'accéder aux premières données chaque fois que son dispositif D reçoit un identificateur de produit ou service.

Les premières données sont par exemple stockées dans des bases de données BD en correspondance d'identificateurs. Comme illustré, ces bases de données BD sont par exemple accessibles au dispositif D via le réseau de communication N. Elles peuvent appartenir à des (ou faire partie de) sites Internet, ou bien être accessibles en direct sous réserve d'autorisations d'accès préalables (ce qui peut s'avérer plus rapide).

Par exemple, si le module d'analyse MA dispose d'un code-barres de produit reçu, il accède à une base de données BD stockant des codes-barres afin de déterminer les premières données qui sont stockées en correspondance du code-barres reçu et qui identifient le produit.

On notera que le module d'analyse MA peut effectuer des identifications de produit ou service dites « fortes » ou « faibles ». Une identification forte est une identification qui aboutit à la détermination d'une instance d'une classe de produit ou service (comme par exemple un modèle particulier d'une voiture fabriquée par un constructeur particulier). Une identification faible est une identification qui aboutit à la détermination d'une appartenance à une classe de produit ou service (comme par exemple la classe « voiture »).

Une deuxième étape du procédé selon l'invention consiste à rechercher dans au moins une source d'informations SI des informations qui sont relatives à un produit ou service qui a été identifié pendant une première étape.

On comprendra que cette recherche est également effectuée par le dispositif d'analyse D. Plus précisément, lorsque le module d'analyse MA a identifié un produit ou service, il accède à au moins une source d'informations SI pour y rechercher des informations relatives à ce produit ou service identifié. Cette recherche peut se faire au moyen d'un module de recherches, comme par exemple un moteur de recherches (ou analogue).

Les sources d'informations SI peuvent être de tout type. Il pourra donc notamment s'agir de sites Internet accessibles au dispositif D via le réseau de communication N. Ces sites Internet SI peuvent par exemple appartenir aux fabricants des produits ou aux entreprises qui proposent les services ou aux distributeurs des produits ou à des sociétés spécialisées dans les enquêtes sur les sociétés et sur leurs modes de fonctionnement ou à des sociétés spécialisées dans les analyses de produits et/ou services ou à des sociétés de presse (notamment pour leurs journaux numériques) ou encore à des organismes gouvernementaux ou non gouvernementaux, notamment. II peut également s'agir de sites de forums ou de banques de données d'articles ou encore de « blogs », par exemple. On notera qu'un usager peut accorder des niveaux de confiance différents aux différentes sources d'informations SI.

Une troisième étape du procédé selon l'invention consiste à déterminer si un produit ou service (identifié pendant une première étape) satisfait à un ensemble choisi comportant au moins une règle (ou un critère), compte tenu des informations recherchées lors d'une deuxième étape.

On comprendra que cette recherche est également effectuée par le dispositif d'analyse D. Plus précisément, lorsque le module d'analyse MA a déterminé des informations relatives à un produit ou service identifié, il vérifie si ce dernier satisfait à un ensemble choisi comportant au moins une règle (ou un critère).

On comprendra également que l'ensemble de règle(s) qui est choisi pour procéder à une vérification est un ensemble qui est associé à la personne physique (usager) ou personne morale (société) qui a initialement fourni l'identificateur à l'origine de cette vérification.

En d'autres termes, si un identificateur est fourni par un usager, le module d'analyse MA utilise l'ensemble de règle(s) (ou critère(s)) qui est associé à cet usager.

Les règles sont de préférence relatives à l'achat ou à l'utilisation de produit(s) ou service(s).

Les données qui définissent chaque ensemble de règle(s) sont préférentiellement stockées dans des moyens de stockage MS, comme par exemple une base de données ou une mémoire, en correspondance d'identifiants d'usagers (ou de sociétés), comme par exemple les identifiants de communication de leurs équipements UE.

Ces moyens de stockage MS font par exemple partie du dispositif D, comme illustré sur l'unique figure. Mais, cela n'est pas obligatoire. IIs peuvent en effet faire partie du serveur S.

On notera que l'on peut également envisager que l'ensemble de règle(s) à utiliser est transmis en même temps que l'identificateur. Dans ce dernier cas, les données qui définissent l'ensemble de règle(s) sont stockées dans l'équipement UE de l'usager et transmises lors de chaque interrogation.

Les règles (ou critères) qui constituent un ensemble associé, par exemple, à un usager peuvent avoir n'importe quelle origine. Ainsi, un ensemble peut ne comporter que des premières règles (ou critères) qui ont été définies par un usager ou bien par une ou plusieurs organisations gouvernementales ou non gouvernementales ou des sociétés ou encore des associations (éventuellement de consommateurs) ou bien encore par le dispositif D lui-même. Mais, un ensemble peut comporter à la fois des premières règles (ou critères) qui ont été définies par un usager et des secondes règles (ou critères) qui ont été définies par une ou plusieurs organisations gouvernementales ou non gouvernementales ou des sociétés ou encore des associations (éventuellement de consommateurs) ou bien encore par le dispositif D lui-même.

On notera que pour simplifier le travail de définition de son ensemble, l'usager peut simplement sélectionner une ou plusieurs organisations gouvernementales ou non gouvernementales ou une ou plusieurs sociétés ou encore une ou plusieurs associations (éventuellement de consommateurs) du fait de la confiance qu'il leur accorde. Dans ce cas, l'ensemble de règles de l'usager comprend automatiquement par défaut les règles de chaque organisation ou société ou association qu'il aura sélectionnée. Bien entendu, l'usager conserve la possibilité par la suite de supprimer (ou modifier) certaines de ces règles, et/ou de leur adjoindre d'autres règles.

Des exemples non limitatifs de règles définies par une organisation non gouvernementale X sont fournis ci-dessous :
- « X recommande de construire sa maison en bois »,
- « X recommande de ne pas acheter les produits de la société Y »,
- « X recommande de ne pas acheter des produits contenant la substance Z »,
- « X appelle à boycotter les produits fabriqués par la société H car elle utilise des enfants »,
- « X recommande d'acheter des produits issus du commerce équitable »,
- « X recommande de ne pas acheter des produits qui ne respectent pas la protection des animaux ».

On notera que certaines règles peuvent avoir une portée générale afin d'être utilisées consécutivement à une identification faible, et certaines règles peuvent avoir une portée (très) précise afin d'être utilisées consécutivement à une identification forte. Par exemple, un ensemble de règle(s) d'un usager peut comporter une règle définie par un organisme non gouvernemental recommandant d'utiliser les transports en commun et donc déconseillant fortement l'achat d'une voiture, quel qu'en soit le type ou la marque. Un ensemble de règle(s) d'un usager peut également comporter une règle définie par un organisme non gouvernemental recommandant d'utiliser un modèle particulier d'une marque particulière du fait qu'il a reçu une mention spéciale relative au respect de l'environnement, par exemple de la part de l'Union Européenne.

Comme indiqué ci-dessus, le dispositif D peut proposer aux usagers des règles qu'il a lui-même définies à partir d'informations stockées dans des sources d'informations, comme par exemple des dictionnaires ou encyclopédies spécialisé(e)s. Cela peut notamment être le cas pour des règles médicales ou pharmacologiques.

Pour qu'un usager puisse définir son ensemble de règle(s), son équipement UE peut être équipé d'une application dédiée qui peut par exemple lui permettre d'accéder à des ensembles de règles publics, définis par des organisations gouvernementales ou non gouvernementales ou bien des sociétés ou encore des associations (éventuellement de consommateurs), afin de sélectionner tout ou partie de leurs règles. Cette sélection peut se faire localement (c'est-à-dire dans l'équipement UE) lorsque des (les) ensembles de règles publics ont été téléchargés dans l'équipement UE, et/ou à distance lorsque des (les) ensembles de règles publics sont accessibles via un site Internet (ou web) dédié du serveur S.

Cette application dédiée peut également et éventuellement permettre à l'utilisateur de sélectionner dans des documents numériques des portions textuelles décrivant des idées auxquelles il adhère. Dans ce cas, l'application dédiée génère des règles à partir des portions textuelles sélectionnées et intègre ces règles dans l'ensemble de l'utilisateur concerné (éventuellement après les lui avoir présentées en vue de l'obtention de son accord).

II est important de noter que certaines règles qui constituent un ensemble ne sont pas forcément celles qui ont été définies et fournies par un usager au moyen de l'application dédiée. En effet, l'invention permet qu'un usager fournisse des « pré-régles » en langage naturel ou pseudo-contraint. Dans ce cas, chaque pré-règle est transcrite en une règle qui est compréhensible (et utilisable en l'état) par le module d'analyse MA pour procéder à une vérification (par corrélation règle(s)/informations).

Cette transcription peut se faire au moyen d'un module de transcription MT. Celui-ci fait de préférence partie du dispositif D. Mais, on peut envisager qu'il fasse partie de l'application dédiée qui est implantée dans chaque équipement UE et qui permet à l'usager de définir et/ou sélectionner des règles pour constituer son ensemble de règle(s).

On notera qu'une transcription peut nécessiter l'accès du module de transcription MT à des données d'informations stockées (et accessibles via le réseau de communication N). Cela peut notamment être le cas lorsqu'une pré-règle porte par exemple sur des indications médicales ou pharmaceutiques, lesquelles peuvent servir à construire un sous-ensemble de règles compte tenu d'informations médicales ou pharmaceutiques publiques, par exemple contenues dans un dictionnaire spécialisé.

Des exemples non limitatifs de pré-règles d'usager sont fournis ci-dessous :
- « je suis allergique au soja »,
- « je n'aime pas les pommes de terre »,
- « ne pas sélectionner les produits qui contiennent plus de 30% de matières grasses »,
- « je ne mange pas de porc »,
- « je suis végétarien ».

Lorsque les données qui définissent un ensemble de règle(s) associé à un usager sont stockées dans les moyens de stockage MS, elles sont mises à jour chaque fois, notamment, que l'usager procède à leur modification via l'application dédiée (et donc via le réseau de communication N). Les ensembles de règle(s) peuvent ainsi évoluer dans le temps de façon dynamique, par exemple en fonction du contexte.

Par ailleurs, lorsque les données qui définissent les ensembles de règle(s) associés aux usagers et sociétés sont stockées dans les moyens de stockage MS, chaque fois que le module d'analyse MA doit procéder à une vérification (troisième étape) pour un usager ou une société, il accède aux moyens de stockage MS pour extraire puis utiliser l'ensemble de règle(s) qui s'y trouve stocké en correspondance de l'identifiant de communication de l'usager ou de la société.

Une fois que le module d'analyse MA dispose d'un ensemble de règle(s) à appliquer et d'informations relatives à un produit ou service, il peut procéder à la vérification (par corrélation entre la (les) règle(s) et les informations). Pour ce faire, il peut par exemple comprendre un sous-module SMA chargé d'effectuer des recherches sémantiques afin de comprendre le sens des informations obtenues pour le produit ou service identifié, puis de vérifier si ce produit ou service satisfait à un ensemble de règle(s) choisi, compte tenu du sens des informations qui s'y rapportent.

On entend ici par « recherches sémantiques » des recherches effectuées au moyen de mots clés pertinents définissant un sujet, éventuellement combinés à des mots clés non pertinents, tels que des articles, prépositions ou conjonctions.

Une fois que le sous-module SMA a terminé une vérification il délivre un résultat.

Tout type de résultat peut être délivré. Ainsi, un résultat peut consister en un code dédié signifiant que le produit ou service identifié satisfait à l'ensemble de règle(s) choisi, ou un code dédié signifiant que le produit ou service identifié ne satisfait pas à l'ensemble de règle(s) choisi, ou encore un code dédié signifiant qu'il existe une éventualité que le produit ou service identifié ne satisfasse pas à l'ensemble de règle(s) choisi. Mais, un code peut être remplacé par une expression littérale.

On notera qu'un résultat peut également et éventuellement être complété par d'autres informations. Ainsi, lorsque le code dédié signifie que le produit ou service identifié ne satisfait pas à l'ensemble de règle(s) choisi, il peut être accompagné d'au moins une raison expliquant ce défaut de satisfaction. De même, si le code dédié signifie qu'il existe une éventualité que le produit ou service identifié ne satisfasse pas à l'ensemble de règle(s) choisi, il peut être accompagné d'au moins une raison expliquant cette possibilité de défaut de satisfaction. La raison peut par exemple être une règle non satisfaite qui est alors désignée.

On peut également envisager, lorsque le code dédié signifie que le produit ou service identifié ne satisfait pas à l'ensemble de règle(s) choisi ou qu'il existe une éventualité que le produit ou service identifié ne satisfasse pas à l'ensemble de règle(s) choisi, qu'il soit accompagné (lorsque cela s'avère possible) d'une description (sommaire) d'au moins un produit ou service sensiblement équivalent (et donc satisfaisant à l'ensemble de règle(s) choisi).

On comprendra que ce dernier cas nécessite que le module d'analyse MA du dispositif D effectue de nouvelles recherches et vérifications (par corrélation) dans des bases de données et des sources d'informations SI afin de déterminer s'il existe effectivement un (des) produit(s) ou service(s) équivalent(s) qui satisfait (satisfont) à l'ensemble de règle(s) choisi.

A titre d'exemple illustratif, le dispositif D peut par exemple rechercher, dans la base de données des produits commercialisés par le supermarché dans lequel se trouve un usager qui a lancé une vérification sur un produit qu'il souhaite acheter, un ou plusieurs produits équivalents à ce dernier. Puis, il recherche les informations relatives à ce(s) produit(s) équivalent(s) et vérifie si ce(s) dernier(s) satisfait (satisfont) à l'ensemble de règle(s) choisi, compte tenu du sens des informations qui s'y rapportent, et dans l'affirmative le code dédié peut être accompagné de la description sommaire de chaque produit ou service équivalent tandis que dans la négative le code dédié peut être accompagné d'une expression telle que « pas d'équivalent disponible », par exemple.

On notera que des informations complémentaires peuvent également désigner des produits de remplacement ou de substitution. Cela peut être le cas lorsqu'une règle est de type contextuel. A titre d'exemple non limitatif, une règle d'un ensemble peut indiquer que l'usager associé ne veut consommer que des fruits et légumes de saison. Dans ce cas, lorsque l'usager a transmis une demande de vérification relative à l'achat d'un fruit ou légume, le module d'analyse MA du dispositif D va déterminer dans les sources d'information si le fruit ou légume identifié est bien de saison, compte tenu du pays dans lequel l'usager se trouve. Dans la négative, d'autres fruits ou légumes de saison peuvent être éventuellement recherchés et proposés sous la forme d'informations complémentaires.

Une quatrième étape du procédé selon l'invention consiste à délivrer un message indiquant au moins le résultat d'une détermination (vérification) effectuée lors d'une troisième étape.

On comprendra que ce message est également délivré par le dispositif d'analyse D et transmis à l'équipement UE qui a fourni l'identificateur et donc qui a requis la vérification. Plus précisément, lorsque le module d'analyse MA dispose du résultat d'une vérification ainsi que des éventuelles informations complémentaires (résultant de recherches et vérifications complémentaires, par exemple pour trouver des produits ou services équivalents), il génère un message indiquant le résultat ainsi que les éventuelles informations complémentaires, en langage naturel ou pseudo-contraint. Puis, il demande à son dispositif de transmettre ce message à l'équipement UE concerné. Ce message s'affiche alors sur l'écran de l'équipement UE sous la forme d'un texte (il peut éventuellement être converti en un message sonore diffusé par le haut-parleur de l'équipement UE).

On notera que certaines règles d'un ensemble peuvent être applicables de façon temporaire pendant une durée choisie. Cela peut par exemple être le cas de règles définies à partir de prescriptions médicales ou du fait d'un régime alimentaire temporaire.

Des exemples non limitatifs de règles temporaires sont fournis ci-dessous :
- « ne pas manger de produits laitiers pendant une semaine »,
- « manger des bananes et du riz une fois par jour pendant trois jours »,
- « ne pas boire de lait pendant une semaine ».

Comme indiqué précédemment, certaines de ces règles peuvent être définies par le dispositif D (par exemple par son module de transcription MT) à partir de règles fournies par un usager et d'informations obtenues dans des bases de données spécialisées. Cela peut notamment être le cas de règles issues de prescriptions médicales désignant des médicaments qui ne doivent pas être utilisés en même temps que d'autres médicaments ou produits. Ainsi, la règle « ne pas boire de lait pendant une semaine » peut résulter du fait qu'un usager a fourni, consécutivement à l'obtention d'une ordonnance médicale, une règle indiquant qu'il doit prendre un médicament W pendant une semaine et qu'il existe par ailleurs une contre-indication quant à la consommation de lait en même temps que ce médicament W.

On notera que certaines règles temporaires peuvent constituer des règles d'alerte définies par un organisme gouvernemental afin de signaler un danger. Elle se présentent alors sous la forme d'une recommandation de ne pas (ou d'une interdiction de) consommer un ou plusieurs produits issus d'une zone (ou région) définie. Par exemple il peut être recommandé de ne pas manger les poissons et les crustacés qui proviennent d'un lac ou d'une zone maritime. De telles règles temporaires d'alerte peuvent être éventuellement intégrées d'office dans chaque ensemble de règle(s) stocké dans les moyens de stockage MS du dispositif D, éventuellement si l'usager associé a donné son autorisation.

Le module d'analyse MA peut donc être agencé de manière à n'utiliser une règle assortie d'une contrainte temporaire que pendant la durée d'utilisation indiquée dans la règle et à compter de sa date de stockage dans les moyens de stockage MS. A l'expiration de cette durée d'utilisation, le module d'analyse MA est agencé de manière à supprimer la règle temporaire des moyens de stockage MS. On comprendra qu'une règle temporaire nouvellement ajoutée à l'ensemble d'un usager sera utilisée lors de chaque nouvelle demande de vérification effectuée par cet usager pendant sa durée d'utilisation.

Il est important de noter que le module d'analyse MA du dispositif D peut être éventuellement agencé de manière à effectuer des vérifications lorsque des ensembles contiennent des règles antagonistes (ou conflictuelles). Cette situation peut notamment survenir lorsqu'un usager décide de constituer son ensemble de règles à partir de ses propres premières règles (ou pré-règles) et de secondes règles définies par une ou plusieurs personnes morales.

Afin que le module d'analyse MA puisse être capable de résoudre des conflits inter-règles, on peut par exemple envisager que les usagers attribuent des niveaux d'importance différents à certaines au moins des règles qu'ils sélectionnent pour constituer leurs ensembles respectifs. Les règles sont alors stockées en correspondance de leur niveau d'importance. Dans ce cas, lorsque le module d'analyse MA est en présence d'un ensemble comportant au moins une paire de règles antagonistes (ou conflictuelles), il est agencé de manière à ne pas tenir compte de la règle de chaque paire qui est associée au niveau d'importance le plus faible.

Le dispositif d'analyse d'informations D selon l'invention, et notamment son module d'analyse MA et son (ou ses) éventuel(s) module(s) de transcription MT et moyens de stockage MS sont préférentiellement réalisés sous la forme de modules logiciels (ou informatiques). Mais, ils pourraient être également réalisés sous la forme de circuits électroniques ou d'une combinaison de circuits électroniques et de modules logiciels propres à communiquer ensembles via une interface appropriée.

L'invention ne se limite pas aux modes de réalisation de dispositif d'analyse d'informations, de serveur et de procédé d'analyse d'informations décrits ci-avant, seulement à titre d'exemple, mais elle englobe toutes les variantes que pourra envisager l'homme de l'art dans le cadre des revendications ci-après.

## Revendications

1. Procédé d'analyse d'informations relatives à des produits et services, **caractérisé en ce qu'**il consiste i) à identifier un produit ou service parmi des premières données, en fonction d'un identificateur qui le représente, ii) à rechercher dans au moins une source d'informations des informations relatives audit produit ou service identifié, iii) à déterminer si ledit produit ou service identifié satisfait à un ensemble d'au moins une règle choisi compte tenu desdites informations recherchées, et iv) à délivrer un message indiquant au moins le résultat de ladite détermination.

2. Procédé selon la revendication 1, **caractérisé en ce que** lorsque ledit produit ou service identifié ne satisfait pas audit ensemble choisi, on délivre un message indiquant également au moins une raison de ce défaut de satisfaction.

3. Procédé selon l'une des revendications 1 et 2, **caractérisé en ce que** lorsqu'il existe une éventualité que ledit produit ou service identifié ne satisfasse pas audit ensemble choisi, on délivre un message indiquant également au moins une raison de cette possibilité de défaut de satisfaction.

4. Procédé selon l'une des revendications 1 à 3, **caractérisé en ce que** lorsque ledit produit ou service identifié ne satisfait pas audit ensemble choisi ou lorsqu'il existe une éventualité que ledit produit ou service identifié ne satisfasse pas audit ensemble choisi, on tente de déterminer au moins un produit ou service sensiblement équivalent audit produit ou service identifié et donc satisfaisant audit ensemble de règle(s) choisi, de manière à délivrer un message indiquant également chaque produit ou service sensiblement équivalent déterminé.

5. Procédé selon l'une des revendications 1 à 4, **caractérisé en ce que** l'on procède à des identifications de produit ou service soit de type « fort » du fait qu'elles aboutissent à des déterminations d'instances de classe de produit ou service, soit de type « faible » du fait qu'elles aboutissent à des déterminations d'appartenance à une classe de produit ou service.

6. Procédé selon l'une des revendications 1 à 5, **caractérisé en ce que** certains au moins des ensembles de règle(s) évoluent dans le temps de façon dynamique.

7. Procédé selon l'une des revendications 1 à 6, **caractérisé en ce que** chaque identificateur est choisi dans un groupe comprenant au moins un code-barres et un identifiant.

8. Procédé selon l'une des revendications 1 à 7, **caractérisé en ce que** l'on obtient puis l'on fournit ledit identificateur au moyen d'un équipement (UE) d'un usager.

9. Procédé selon l'une des revendications 1 à 8, **caractérisé en ce que** certains au moins des ensembles de règle(s) sont associés à des usagers disposant d'un équipement (UE).

10. Procédé selon la revendication 9, **caractérisé en ce que** l'on génère certaines au moins des règles à partir de « pré-règles » définies en langage naturel ou pseudo-contraint par des usagers et fournies par les équipements (UE) dont ils disposent.

11. Procédé selon l'une des revendications 9 et 10, **caractérisé en ce que** certaines règles de certains ensembles associés à des usagers sont issues d'ensemble(s) de règles associées à des personnes morales sélectionnées par lesdits usagers.

12. Procédé selon l'une des revendications 9 à 11, **caractérisé en ce que** l'on attribue des niveaux d'importance différents à certaines au moins des règles, et **en ce qu'**en présence d'un ensemble comportant des règles antagonistes on ne tient compte que des règles qui ont le niveau de priorité le plus élevé.

13. Procédé selon l'une des revendications 1 à 12, **caractérisé en ce que** lesdites règles sont relatives à l'achat ou à l'utilisation de produit(s) ou service(s).

14. Procédé selon l'une des revendications 1 à 13, **caractérisé en ce que** certaines règles sont applicables de façon temporaire pendant une durée choisie.

15. Procédé selon l'une des revendications 1 à 14, **caractérisé en ce que** l'on génère certaines règles à partir de portions textuelles de documents numériques sélectionnées par des usagers et décrivant des idées auxquelles ils adhèrent.

16. Dispositif (D) d'analyse d'informations relatives à des produits et services, **caractérisé en ce qu'**il comprend des moyens d'analyse (MA) agencés, en cas de réception d'un identificateur représentant un produit ou service, pour accéder à des premières données pour identifier ledit produit ou service parmi elles, en fonction dudit identificateur reçu, puis pour accéder à au moins une source d'informations (SI) pour y rechercher des informations relatives audit produit ou service identifié, puis pour déterminer parmi lesdites informations recherchées si ledit produit ou service identifié satisfait à un ensemble d'au moins une règle choisi, et pour délivrer un message indiquant au moins le résultat de ladite détermination.

17. Dispositif selon la revendication 16, **caractérisé en ce que** lesdits moyens d'analyse (MA) sont agencés, lorsque ledit produit ou service identifié ne satisfait pas audit ensemble choisi, pour délivrer un message indiquant également au moins une raison de ce défaut de satisfaction.

18. Dispositif selon l'une des revendications 16 et 17, **caractérisé en ce que** lesdits moyens d'analyse (MA) sont agencés, lorsqu'il existe une éventualité que ledit produit ou service identifié ne satisfasse pas audit ensemble choisi, pour délivrer un message indiquant également au moins une raison de cette possibilité de défaut de satisfaction.

19. Dispositif selon l'une des revendications 16 à 18, **caractérisé en ce que** lesdits moyens d'analyse (MA) sont agencés, lorsque ledit produit ou service identifié ne satisfait pas audit ensemble choisi ou lorsqu'il existe une éventualité que ledit produit ou service identifié ne satisfasse pas audit ensemble choisi, pour tenter de déterminer au moins un produit ou service sensiblement équivalent audit produit ou service identifié et donc satisfaisant audit ensemble de règle(s) choisi, de manière à délivrer un message indiquant également chaque produit ou service sensiblement équivalent déterminé.

20. Dispositif selon l'une des revendications 16 à 19, **caractérisé en ce que** lesdits moyens d'analyse (MA) sont agencés pour effectuer des identifications de produit ou service dites soit « fortes » lorsqu'elles aboutissent à une détermination d'une instance d'une classe de produit ou service, soit « faibles » lorsqu'elles aboutissent à une détermination d'une appartenance à une classe de produit ou service.

21. Dispositif selon l'une des revendications 16 à 20, **caractérisé en ce que** certains au moins des ensembles de règle(s) sont associés à des usagers disposant d'un équipement (UE).

22. Dispositif selon la revendication 21, **caractérisé en ce qu'**il comprend des moyens de transcription (MT) agencés, en cas de réception d'une « pré-règle » définie en langage naturel ou pseudo-contraint par un usager et fournie par l'équipement (UE) dont il dispose, pour transcrire ladite pré-règle en une règle de l'ensemble associé audit usager.

23. Dispositif selon l'une des revendications 21 et 22, **caractérisé en ce que** certaines règles de certains ensembles associés à des usagers sont issues d'ensemble(s) de règles associées à des personnes morales sélectionnées par lesdits usagers.

24. Dispositif selon l'une des revendications 21 à 23, **caractérisé en ce que** lesdits moyens d'analyse (MA) sont agencés, en présence d'un produit ou service identifié et d'un ensemble comportant des règles associées à des niveaux d'importance différents et pour certaines antagonistes entre elles, pour ne tenir compte que des règles qui ont le niveau de priorité le plus élevé.

25. Dispositif selon l'une des revendications 16 à 24, **caractérisé en ce que** lesdites règles sont relatives à l'achat ou à l'utilisation de produit(s) ou service(s).

26. Dispositif selon l'une des revendications 16 à 25, **caractérisé en ce que** lesdits moyens d'analyse (MA) sont agencés, en présence d'une règle applicable de façon temporaire pendant une durée choisie, pour n'appliquer cette règle temporaire que pendant sa durée d'application.

27. Serveur (S) pour un réseau de communication, **caractérisé en ce qu'**il comprend un dispositif d'analyse (D) selon l'une des revendications 16 à 26.
